# EUROPEAN PATENT SPECIFICATION

(11) **EP 2 900 545 B1**
(45) Date of publication and mention of the grant of the patent: **31.08.2016**
(21) Application number: 13762524.0
(22) Date of filing: 17.09.2013
(51) Int. Cl.: B62K 3/00, B62K 7/00, B62J 7/06, A63C 17/01

(54) **TRANSPORTATION DEVICE**
TRANSPORTVORRICHTUNG
DISPOSITIF DE TRANSPORT

(30) Priority: 28.09.2012 NL 2009531
(43) Date of publication of application: 05.08.2015
(73) Proprietor: Maxi Miliaan B.V., 5704 RD Helmond (NL)
(72) Inventor: STORM, Gerjan, NL-5651 ED Eindhoven (NL); SCHROOTEN, Mark, B-2020 Antwerpen (BE)
(74) Representative: Veldman-Dijkers, Cornelia G. C.
(86) International application number: PCT/EP2013/069269
(87) International publication number: WO 2014/048796

(56) References cited:
- CN-U- 202 379 031
- DE-A1-102006 049 770
- DE-U1-202004 003 741
- GB-A- 2 195 298
- US-A- 3 751 062
- US-A- 4 183 546
- US-A1- 2010 222 941
- US-B1- 6 315 307
- US-B1- 6 460 866

## Description

The invention relates to a transportation device for transporting a child by an adult, comprising an elongated board provided with a footrest for the adult, at least two front wheels, at least a rear wheel, at least one handle frame located above the elongated board and at least one seat for the child connected to the handle frame which handle frame comprises a first part being connected with a first end to the elongated board near the front side thereof and provided near a second end with a handle, which handle frame further comprises a second part connected to the first part between the first and second ends thereof and connected to the elongated board between the first end of the first part and the at least one rear wheel.

In this application an adult is considered as any person of any age being responsible enough for transporting a child by means of the transportation device according to the invention. Transportation devices for transporting children by adults as such are known like strollers or pushchairs. However, common strollers are not provided with a footrest for the adult.

Such a transportation device according to the preamble of claim 1 is known from CN202379031U. One of the disadvantages of this known device is that, other than on its own wheels, it is difficult to transport the device due to the size of it. Also the storage of the transportation device takes a lot of space, Another disadvantage of this known device is that the wheels are rotatable about their axis but that other movements of the wheels are not foreseen, rendering the transportation device difficult to steer.

It is an object of the invention to provide a transportation device to transport a child, wherein the adult can easily steer the transportation device whilst standing comfortable on the transportation device.

It is another object of the invention to make it easier to transport and/or store the transportation device.

These objects are accomplished with the transportation device according to the invention in that the transportation device comprises an elongated board provided with the footrest, wherein the front wheels are rotatably connected to a common front axle housing, which common front axle housing being located below the elongated board and being pivotable about a front axis connected to a front side of the elongated board, wherein the front axis encloses an angle of more than one degree with a virtual line extending perpendicular to the footrest, whilst the handle frame is located above the elongated board and connected to the elongated board to the front side thereof, wherein in use by forcing the handle frame by the person standing on the footrest in a transverse direction perpendicular to a longitudinal axis of the elongated board, the elongated board will be tilted and the common front axle housing will be pivoted, wherein the handle frame is foldable from an erect position to a collapsed position and vice versa, wherein the first part is pivotably connected with the first end to the elongated board near the front side thereof whilst the second part is at least pivotably connected to the first part or the elongated board.

The elongated board can for example be as wide as the seat to provide enough space for both feet of the adult so that the adult can easily and comfortably stand on the elongated board. While standing on the elongated board behind the seat, the adult will hold his hands on the handle frame so that he stands stable on the elongated board. To the front side of the elongated board the handle frame is connected and the common front axle housing is pivotably connected. As will be clear the handle frame will be substantially located above the elongated board whilst the common front axle housing will be substantially located below the elongated board. The handle frame is fixed to the elongated board in a manner that in an erect position the handle frame is not movable with respect to the elongated board. If a person wants to steer the transportation device he will exert a steering force with his hands on the handle frame in the transverse direction perpendicular to the longitudinal axis of the elongated board. Due to this steering force a pushing force will be exerted on a first side of the elongated board whilst a pulling force will be exerted on the other second side of the elongated board due to which the elongated board will intend to tilt about its longitudinal axis. These forces will be transferred to the common front axle housing which will react by pivoting about the front axis in a manner that the front wheel on the first side of the elongated board will be moved rearwardly and the front wheel on the second side of the elongated board will be moved forwardly, so that the transportation device will be steered in the right direction. The adult does not need to shift his body weight although this will help the steering of the transportation device. By steering by means of exerting a steering force on the handle frame an adult with no experience with riding on a elongated board, will feel very comfortable on the elongated board since he can hold his hands on the handle frame for stability and will learn very fast how to steer the transportation device. If he has some experience he additionally may want to use the shifting of his body weight for the steering of the transportation device.

The handle frame having an upside down Y-shape provides a stable support for the child seat and enables a good transfer of the forces from the handle frame via the elongated board to the common front and rear axle housings. Furthermore such Y-shaped frame is relatively simple and can easily be mounted on the elongated board.

It has to be noted that a transportation device which is known from GB2195298 comprises two spaced apart parallel runners. Each runner is provided with a footrest. An adult can walk between the runners or stand with his feet on the footrests of the two runners. Each runner is provided near the rear side with a steering rotatable rear wheel being pivotable about a vertically extending axis. Each runner is provided on the front side with a non-steering rotatable front wheel. Between the rear side and the front side the transportation device is provided with a cross bar handle and a seat in front of the cross bar handle.

A disadvantage of this known transportation device is that due to the non-steering front wheels and the rear wheels being pivotable about vertical axes, the steering of the transportation device by shifting of the body weight will not be very effective.

Furthermore, the adult needs to put his feet on the runners having a relative small width.

An embodiment of the transportation device according to the invention is characterized in that the second part is pivotably connected to the first part and releasably connected to the elongated board or vice versa.

After releasing the connection between the second part and the elongated board, the second part can be pivoted in the direction of the first part after which the first part can be pivoted towards the elongated board. It is also possible that the second part is releasably connected to the first part. In such a case after releasing the connection between the second part and the first part, the second part can be pivoted in the direction of the elongated board after which the first part can be pivoted towards the elongated board as well.

Another embodiment of the transportation device according to the invention is characterized in that the second part comprises at least two pivotably interconnected portions, a first portion being pivotably connected to the first part and a second portion being pivotably connected to the elongated board.

By pivoting the first and second portions towards each other, the first part will be pivoted towards the elongated board.

Preferably the handle frame can be locked in both the erect position and the collapsed position so that the transportation device maintains in its desired position.

Another embodiment of the transportation device according to the invention is characterized in that the transportation device comprises at least two rear wheels being rotatably connected to a common rear axle housing, which common rear axle housing being pivotable about a rear axis connected to a rear side of the elongated board, wherein the rear axis encloses an angle of more than one degree with the virtual line extending perpendicular to the footrest.

By having a steerable common rear axle housing as well, the steering capability of the transportation device is further improved.

Another embodiment of the transportation device according to the invention is characterized in that the front axis and the rear axis enclose angles of more than one degree in opposite directions with respect to the virtual line extending perpendicular to the footrest.

During steering, the forces exerted on the handle frame will be transferred to the common front and rear axle housings, whereby the common front axle housing will react by pivoting about the front axis in a manner that the front wheel on the first side of the elongated board will be moved rearwardly and the front wheel on the second side of the elongated board will be moved forwardly, whilst the common rear axle housing will react by pivoting about the rear axis in a manner that the rear wheel on the first side of the elongated board will be moved forwardly and the rear wheel on the second side of the elongated board will be moved rearwardly and the transportation device will be steered in the right direction.

Another embodiment of the transportation device according to the invention is characterized in that the distance between the two front wheels is about the same as the distance between the two rear wheels.

Within the desired width of the transportation device, both distances are preferably as large as possible to improve the stability of the elongated board.

Another embodiment of the transportation device according to the invention is characterized in that the elongated board comprises a front part provided with the at least two front wheels, a middle part and a rear part provided with the at least one rear wheel, wherein the middle part is lowered with respect to the front part and the rear part.

Such a lowered middle part of the elongated board makes it easier for an adult to step on the elongated board, whilst the raised front part and rear part makes it possible to use wheels with relatively large diameters. Such a transportation device is very suitable for stability at high speeds and can be used for downhill speed-elongated boarding.

Another embodiment of the transportation device according to the invention is characterized in that the elongated board is provided with a brake mechanism for braking the at least one rear wheel.

The braking mechanism may comprise an element which can be pressed against the tires of the rear wheels to be able to brake the transportation device if the speed is getting too high or if the adult wants to stop the transportation device.

Another embodiment of the transportation device according to the invention is characterized in that the transportation device comprises an electric motor for driving at least one of the front wheels and/or the at least one rear wheel.

By means of the electric motor the transportation device can easily be driven. Activation of the electric motor is preferably done by switches located on the handle frame in the area where the adult puts his hands to steer the transportation device.

Another embodiment of the transportation device according to the invention is characterized in that the seat is a flexible seat made of a fabric.

Such a seat will easily fold if the transportation device is being collapsed but will provide a good support for the child in the erect position of the transportation device.

Another embodiment of the transportation device according to the invention is characterized in that the elongated board is a whole made as a single unit.

Such an elongated board will provide the transportation device the appearance of a stable, sportive and robust elongated board.

The invention will be explained in more detail hereinafter with reference to the drawings in which:
Figures 1-3 are an upper perspective view, a lower perspective view and a side view of a transportation device according to the invention in an erected position,
Figures 4-5 are an upper perspective view and a side view of a transportation device according to the invention in a collapsed position.

Like parts are indicated by the same numerals in the various figures.

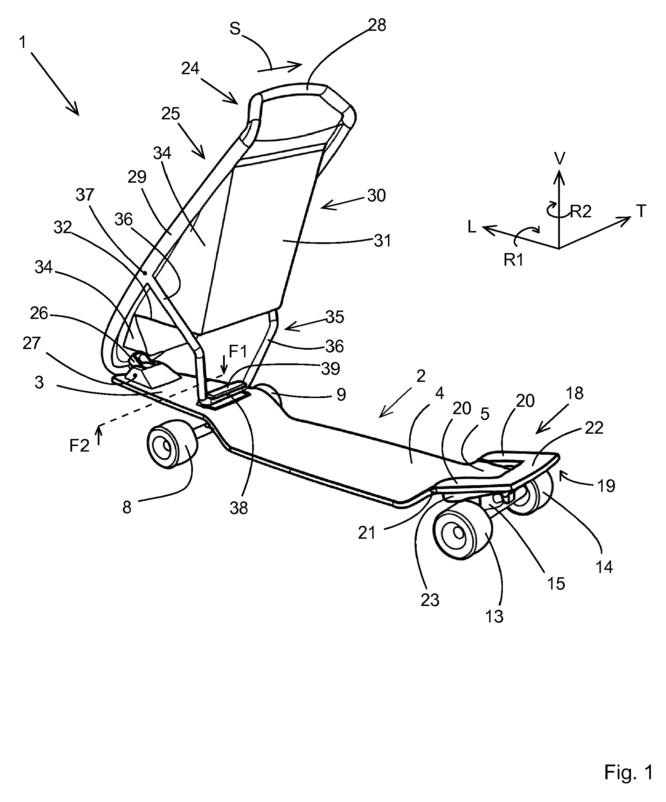

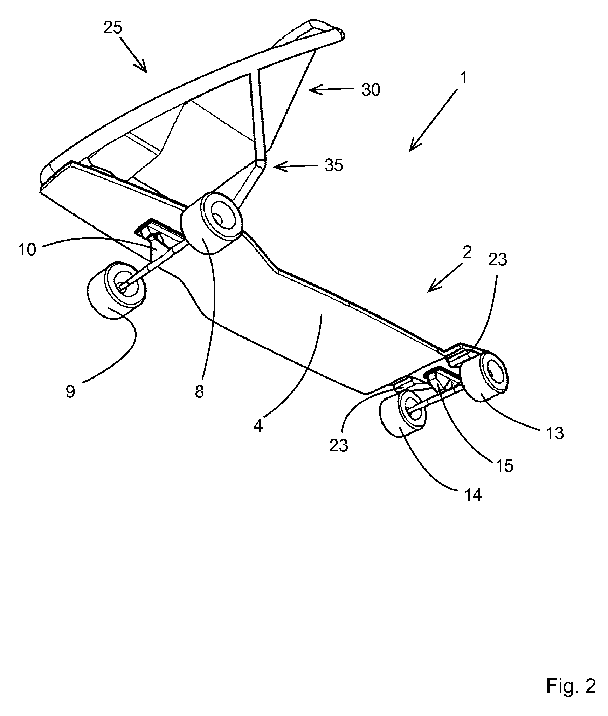

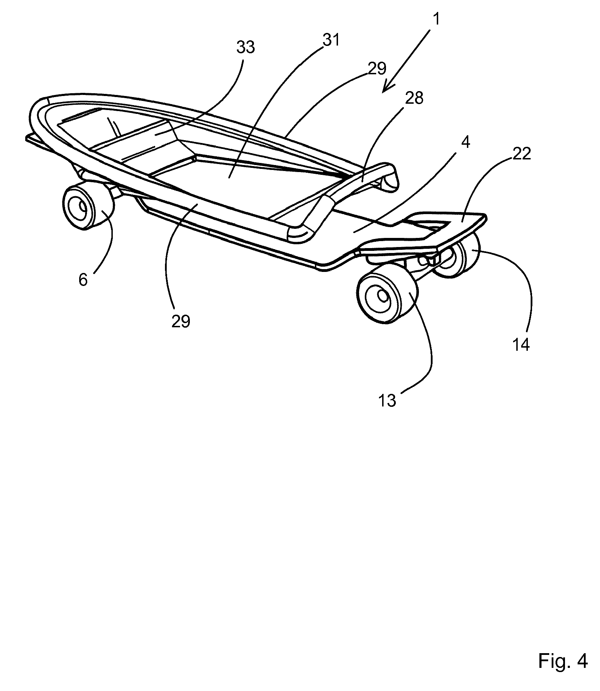

The figures 1-3 and 4-5 show an upper perspective view, a lower perspective view and a side view of a transportation device 1 according to the invention in an erected and collapsed position respectively. The transportation device 1 comprises an elongated board 2 made as a whole as a single unit. Such elongated board 2 can be 0.8 meter to 1.5 metre, for example 1.3 metre in the longitudinal direction L and 0.2 metre to 0.3 meter in the transverse direction T. The elongated board 2 comprises a front part 3, a middle part 4 and a rear part 5 being connected to each other by curved parts 6, 7. The elongated board 2 is preferably made from wood ply comprising two to eleven layers of usually 2 millimetres thickness, composed of birch, bamboo, or maple. The middle part 4 extends parallel to the front part 3 and the rear part 5 but is lowered with respect the front part 3 and the rear part 5. The middle part 4 forms a footrest for an adult.

The transportation device 1 comprises two front wheels 8, 9 being rotatably connected to a common front axle housing 10. The common front axle housing 10 is connected to the front part 3 and is pivotable about a front axis 11 with respect to the front part 3. The front axis 11 encloses an angle A of more than one degree with a virtual line 12 extending perpendicular to the front part 3.

The transportation device 1 comprises two rear wheels 13, 14 being rotatably connected to a common rear axle housing 15. The common rear axle housing 15 is connected to the rear part 5 and is pivotable about a rear axis 16 with respect to the rear part 5. she rear axis 16 encloses an angle B of more than one degree with a virtual line 17 extending perpendicular to the rear part 5.

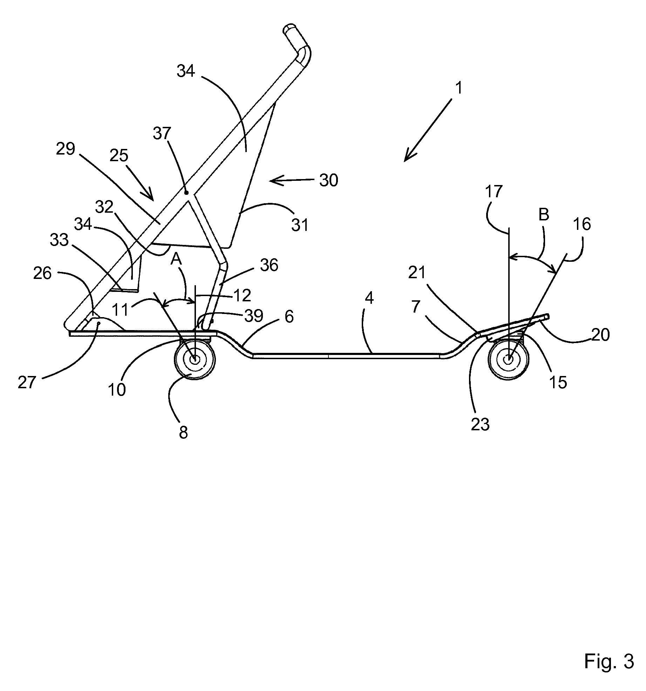

As can be seen in figure 3, the angles A, B are identical in size but are oppositely directed. The angles A, B are always oppositely directed and can be any angle between 1 and 89 degrees. Preferably the angles A, B are identical in size but they can be different.

Such wheels and axle housings are known as such, for example from US20110140385A.

The distance between the two front wheels 8, 9 is about the same as the distance between the two rear wheels 13, 14. It is however also possible that the distances between the front wheels and rear wheels are different.

Near the rear part 5, the elongated board 2 is provided with a brake mechanism 18 for braking the rear wheels 13, 14. The braking mechanism 18 comprises a U-shaped part 19. The U-shaped part 19 is provided with two leg parts 20 being pivotably connected to the rear part 5 at pivots 21. The U-shaped part 19 is also provided with a bridge part 22 extending between the leg parts 20 at a side remote of the pivots 21. The lower sides of the leg parts 20 are provided with brake elements 23. By pushing the bridge part 22 downwardly with a foot of the adult against spring force, the brake elements 23 will be pressed against the rear wheels 13, 14 or the ground surface and the rotation of the wheels 13, 14 will be stopped. Springs or the material of the elongated board 2 may provide the spring force.

The transportation device 1 is also provided with a handle frame 24. The handle frame 24 comprises a first part 25 being pivotably connected with a first end 26 at pivot 27 to the front part 3 of the elongated board 2 and provided near a second end with a handle 28. Between the first end 26 and the handle 28, the first part 25 is provided with two side bars 29. A flexible seat 30 made of a fabric is provided with a back portion 31, a sitting portion 32, a child footsupport portion 33 and two side portions 34. The side portions 34 of the flexible seat 30 are connected to the side bars 29.

The handle frame 24 further comprises a U-shaped second part 35. The U-shaped second part 35 comprises two leg parts 36 being pivotably connected to the first part 25 at pivots 37 located between the first end 26 and the handle 28. The U-shaped second part 35 also comprises a bridge part 38 extending between the leg parts 36 at a side remote of the pivots 37. The front part 3 is provided near the curved part 6 with a clamp 39 in which the bridge part 38 of the second part 35 can be releasably clamped.

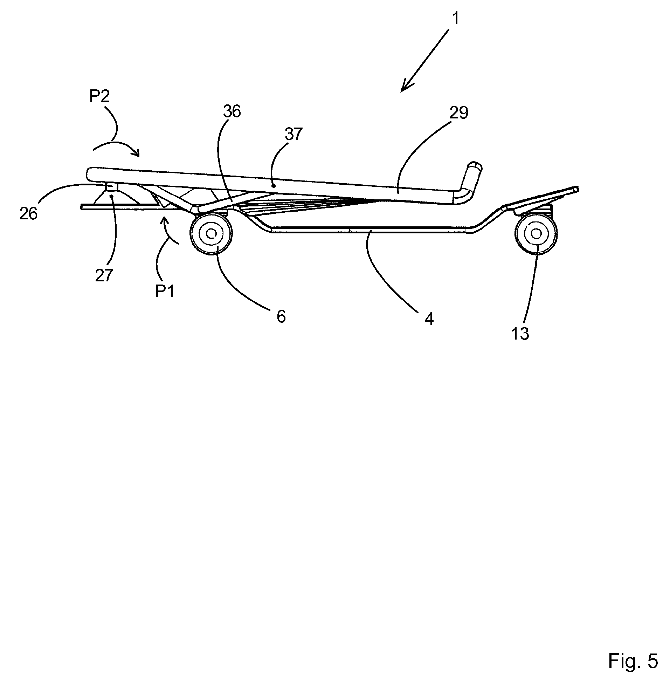

When releasing the clamp 39, the bridge part 38 can be moved in a rearwardly direction, after which the first part 25 of the handle frame 24 can be tilted slightly forwardly so that the second part 35 can be pivoted about pivot axis 37 in a direction indicated by arrow P1 (see figure 5). As soon as the second part 35 is pivoted towards the first part 25, the first part 25 can be pivoted about pivot axis 27 in a direction indicated by arrow P2 towards the elongated board 2 to bring the transportation device 1 in the collapsed position (see figure 5).

In the erect position, as shown in the figures 1-3, the transportation device 1 according to the invention works as follows.

An adult who wants to use the transportation device 1 for transporting a child, places the child in the seat 30. The seat 30 is preferably provided with belts for holding the child in the seat 30.

The adult then places one foot on the elongated board 2 and pushes with the other foot on the ground to push himself forwardly in the longitudinal direction L of the elongated board 2. As soon as he has enough speed or is on a downward hill, he places his other foot on the elongated board 2 as well. If the adult wants to steer the transportation device 1 he will exert a steering force indicated by arrow S with his hands on the handle 28 in the transverse direction T perpendicular to the longitudinal direction L. Due to this steering force indicated by arrow S at a distance from the elongated board 2, a torque is exerted on the elongated board 2 resulting in a pushing force F1 on the right side of the elongated board 2 and a pulling force F2 on the left side of the elongated board 2 due to which the elongated board 2 will intend to tilt in a direction indicated by arrow R1 about a longitudinal direction L. These forces F1, F2 will be transferred to the common front and rear axle housings 10, 15, whereby the common front axle housing 10 reacts by pivoting about the front axis 11 in a manner that the front wheel 9 is being moved rearwardly and the front wheel 8 is being moved forwardly, whilst the common rear axle housing reacts by pivoting about the rear axis 16 in a manner that the rear wheel 14 is being moved forwardly and the rear wheel 13 is being moved rearwardly and the transportation device 1 will be steered in the rotation direction indicated by arrow R2 about the vertical axis V.

If the steering force is in an direction opposite to arrow S, the transportation device 1 will be steered in a rotation direction opposite to arrow R2. The adult can support the steering by swifting its body weight to the right or left to support the steering in the right or left direction.

Depending on the angles A, B between the front and rear axis 11, 16 and the virtual vertical lines 12,17, the transportation device 1 will feel more stable but will turn less easy or vice versa. For example in case that the angle is 40 degrees the transportation device 1 will feel much stabler than with an angle of 50 degrees. However, with an angle of 50 degrees the transportation device 1 can easier be steered. Due to the relatively simple handle frame 25, the appearance of the transportation device 1 looks like a sportive elongated board with the same steering possibilities whilst the adult is being able to take a child with him.

It is also possible that on the rear part 5 only one non-steerable wheel is provided.

It is also possible that the front part 3, middle part 4 and rear part 5 are located a about the same distance of the ground and form one flat unit.

It is also possible that the second part of the handle frame 24 is pivotably connected to the elongated board and releasably connected to the first part.

It is also possible that the second part comprises at least two pivotably interconnected portions, a first portion being pivotably connected to the first part and a second portion being pivotably connected to the elongated board, wherein the transportation device can be collapsed by moving the first and second portions towards each other.

It is also possible that the handle frame together with the seat is detachably connected to the elongated board so that an adult can use the elongated board temporarily as a skateboard and not as a means for transporting a child.

It is also possible to provide the transportation device with an electric motor for driving at least one of the front wheels and/or the at least one rear wheel.

It is also possible to provide the transportation device 1 with means to adapt the angles A, B to be able to improve the stability whilst reducing the sensibility for steering (reducing angles A, B) or improve the sensibility for steering whilst reducing the stability (enlarging angles A, B).

It is also possible that the elongated board comprises a number of interconnected units.

### List of references

- 1: transportation device
- 2: elongated board
- 3: front part
- 4: middle part
- 5: rear part
- 6: curved part
- 7: curved part
- 8: front wheel
- 9: front wheel
- 10: common front axle housing
- 11: front axis
- 12: virtual vertical line
- 13: rear wheel
- 14: rear wheel
- 15: common rear axle housing
- 16: rear axis
- 17: virtual vertical line
- 18: braking mechanism
- 19: U-shaped part
- 20: leg part
- 21: pivot
- 22: bridge part
- 23: brake element
- 24: handle frame
- 25: first part
- 26: first end
- 27: pivot
- 28: handle
- 29: side bar
- 30: seat
- 31: back portion
- 32: sitting portion
- 33: footsupport portion
- 34: side portions
- 35: U-shaped second part
- 36: leg part
- 37: pivot axis
- 38: bridge part
- 39: clamp

## Claims

1. A transportation device (1) for transporting a child by an adult, comprising an elongated board (2) provided with a footrest (4) for the adult, at least two front wheels (8, 9), at least a rear wheel (13, 14), at least one handle frame (24) located above the elongated board (2) and at least one seat (30) for the child connected to the handle frame (24) which handle frame (24) comprises a first part being connected with a first end (26) to the elongated board (2) near the front side thereof and provided near a second end with a handle (28), which handle frame (24) further comprises a second part (35) connected to the first part (25) between the first and second ends (26, 28) thereof and connected to the elongated board (2) between the first end (26) of the first part (25) and the at least one rear wheel (13, 14), **characterized in that** the front wheels (8, 9) are rotatably connected to a common front axle housing (10), which common front axle housing (10) being located below the elongated board and being pivotable about a front axis (11) connected to a front side of the elongated board (2), wherein the front axis (11) encloses an angle of more than one degree with a virtual line (12) extending perpendicular to the footrest (4), whilst the handle frame (24) is located above the elongated board and connected to the elongated board (2) near the front side thereof, wherein in use by forcing the handle frame (24) by the person standing on the footrest (4) in a transverse direction perpendicular to a longitudinal axis of the elongated board (2), the elongated board (2) will be tilted and the common front axle housing (10) will be pivoted, wherein the handle frame (24) is foldable from an erect position to a collapsed position and vice versa, wherein the first part is pivotably connected with the first end (26) to the elongated board (2) near the front side thereof whilst the second part (35) is at least pivotably connected to the first part (25) or the elongated board (2).

2. A transportation device (1) according to claim 1, **characterized in that** the second part (35) is pivotably connected to the first part (25) and releasably connected to the elongated board (2) or vice versa.

3. A transportation device (1) according to claim 1, **characterized in that** the second part (35) comprises at least two pivotably interconnected portions, a first portion being pivotably connected to the first part (25) and a second portion being pivotably connected to the elongated board (2).

4. A transportation device (1) according to one of the preceding claims, **characterized in that** the transportation device (1) comprises at least two rear wheels (13, 14) being rotatably connected to a common rear axle housing (15), which common rear axle housing (15) being pivotable about a rear axis (16) connected to a rear side of the elongated board (2), wherein the rear axis (16) encloses an angle of more than one degree, with the virtual line (17) extending perpendicular to the footrest (4).

5. A transportation device (1) according to claim 4, **characterized in that** the front axis (11) and the rear axis (16) enclose angles of more than one degree in opposite directions with respect to the virtual line (12, 17) extending perpendicular to the footrest (4).

6. Transportation device (1) according to claim 4 or 5, **characterized in that** the distance between the two front wheels (8, 9) is about the same as the distance between the two rear wheels (13, 14).

7. A transportation device (1) according to one of the preceding claims, **characterized in that** the elongated board (2) comprises a front part (3) provided with the at least two front wheels (8, 9), a middle part (4) and a rear part (5)provided with the at least one rear wheel (13, 14), wherein the middle part (4) is lowered with respect to the front part (3) and the rear part (5).

8. A transportation device (1) according to one of the preceding claims, **characterized in that** the elongated board (2) is provided with a brake mechanism (18) for braking the at least one rear wheel (13, 14).

9. A transportation device (1) according to one of the preceding claims, **characterized in that** the transportation device (1) comprises an electric motor for driving at least one of the front wheels (8, 9) and/or the at least one rear wheel (13, 14).

10. A transportation device (1) according to one of the preceding claims, **characterized in that** the seat (30) is a flexible seat made of a fabric.

11. A transportation device (1) according to one of the preceding claims, **characterized in that** the elongated board (2) is a whole made as a single unit.

## Patentansprüche

1. Transportvorrichtung (1) für den Transport eines Kindes durch einen Erwachsenen, umfassend eine längliche, mit einer Fußstütze (4) für den Erwachsenen versehene Platte (2), mindestens zwei Vorderräder (8, 9), mindestens ein Hinterrad (13, 14), mindestens einen über der länglichen Platte (2) angeordneten Griffrahmen (24) und mindestens einen mit dem Griffrahmen (24) verbundenen Sitz (30) für das Kind, wobei der Griffrahmen (24) ein erstes Teil, das an einem ersten Ende (26) mit der länglichen Platte (2) nahe deren Vorderseite verbunden und nahe einem zweiten Ende mit einem Griff (28) versehen ist, wobei der Griffrahmen (24) ferner ein mit dem ersten Teil (25) zwischen dessen ersten und zweiten Ende (26, 28) und mit der länglichen Platte (2) zwischen dem ersten Ende (26) des ersten Teils (25) und dem mindestens einen Hinterrad (13, 14) verbundenes zweites Teil (35) umfasst, **dadurch gekennzeichnet, dass** die Vorderräder (8, 9) drehbar mit einem gemeinsamen Vorderachsgehäuse (10) verbunden sind, welches unter der länglichen Platte angebracht und um eine mit der Vorderseite der länglichen Platte (2) verbundene Vorderachse (11) schwenkbar ist, wobei die Vorderachse (11) einen Winkel von mehr als 1° mit einer senkrecht zur Fußstütze (4) verlaufenden gedachten Linie (12) einschließt, während der Griffrahmen (24) oberhalb der länglichen Platte (2) angeordnet und nahe deren Vorderseite mit ihr verbunden ist, wobei die längliche Platte (2) gekippt und das gemeinsame Vorderachsgehäuse (10) geschwenkt wird, wenn im Gebrauch der Griffrahmen (24) von der auf der Fußstütze (4) stehenden Person in eine Querrichtung senkrecht zur Längsachse der länglichen Platte (2) gedrückt wird, wobei der Griffrahmen (24) aus einer aufgerichteten Lage in eine zusammengelegte Lage und umgekehrt faltbar ist, wobei das erste Teil schwenkbar mit dem ersten Ende (26) mit der länglichen Platte (2) nahe deren Vorderseite verbunden ist, während das zweite Teil (35) zumindest mit dem ersten Teil (25) oder der länglichen Platte (2) schwenkbar verbunden ist.

2. Transportvorrichtung (1) nach Anspruch 1, **dadurch gekennzeichnet, dass** das zweite Teil (35) schwenkbar mit dem ersten Teil (25) verbunden und abnehmbar mit der länglichen Platte (2) verbunden ist oder umgekehrt.

3. Transportvorrichtung (1) nach Anspruch 1, **dadurch gekennzeichnet, dass** das zweite Teil (35) zumindest zwei schwenkbar miteinander verbundene Abschnitte umfasst, wobei ein erster Abschnitt schwenkbar mit dem ersten Teil (25) und ein zweiter Abschnitt schwenkbar mit der länglichen Platte (2) verbunden ist.

4. Transportvorrichtung (1) nach einem der vorangehenden Ansprüche, **dadurch gekennzeichnet, dass** die Transportvorrichtung (1) mindestens zwei Hinterräder (13, 14) umfasst, die drehbar mit einem gemeinsamen Hinterachsgehäuse (15) verbunden sind, welches um eine mit der Hinterseite der länglichen Platte (2) verbundene Hinterachse (16) schwenkbar ist, wobei die Hinterachse (16) mit der senkrecht zur Fußstütze (4) verlaufenden gedachten Linie (17) einen Winkel von mehr als 1° einschließt.

5. Transportvorrichtung (1) nach Anspruch 4, **dadurch gekennzeichnet, dass** die Vorderachse (11) und die Hinterachse (16) Winkel von mehr als 1° in entgegengesetzten Richtungen bezogen auf die senkrecht zur Fußstütze (4) verlaufende gedachte Linie (12,17) einschließen.

6. Transportvorrichtung (1) nach Anspruch 4 oder 5, **dadurch gekennzeichnet, dass** der Abstand zwischen den beiden Vorderrädern (8, 9) etwa derselbe ist wieder Abstand zwischen den beiden Hinterrädern (13, 14).

7. Transportvorrichtung (1) nach einem der vorangehenden Ansprüche, **dadurch gekennzeichnet, dass** die längliche Platte (2) ein mit mindestens zwei Vorderrädern (8, 9) versehenes Vorderteil (3), ein Mittelteil (4) und ein mit mindestens einem Hinterrad (13, 14) versehenes Hinterteil umfasst, wobei das Mittelteil (4) bezüglich des Vorderteil (3) und des Hinterteils (5) abgesenkt ist.

8. Transportvorrichtung (1) nach einem der vorangehenden Ansprüche, **dadurch gekennzeichnet, dass** die längliche Platte (2) mit einer Bremsvorrichtung (18) zum Bremsen des mindestens einen Hinterrads (13, 14) versehen ist.

9. Transportvorrichtung (1) nach einem der vorangehenden Ansprüche, **dadurch gekennzeichnet, dass** es einen elektrischen Motor zum Antrieb mindestens eines der Vorderräder (8, 9) und/oder des mindestens einen Hinterrads (13, 14) umfasst.

10. Transportvorrichtung (1) nach einem der vorangehenden Ansprüche, **dadurch gekennzeichnet, dass** der Sitz (30) ein flexibler Sitz aus einem Gewebe ist.

11. Transportvorrichtung (1) nach einem der vorangehenden Ansprüche, **dadurch gekennzeichnet, dass** die längliche Platte (2) ein als Einheit gefertigtes Ganzes ist.

## Revendications

1. Dispositif de transport (1) permettant de transporter un enfant par un adulte, comprenant une planche allongée (2) pourvue d'un repose-pieds (4) pour l'adulte, d'au moins deux roues avant (8, 9), d'au moins une roue arrière (13, 14), d'au moins un châssis de poignée (24) situé au-dessus de la planche allongée (2) et d'au moins une assise (30) pour l'enfant raccordée au châssis de poignée (24), le châssis de poignée (24) comprenant une première partie raccordée par une première extrémité (26) à la planche allongée (2) à proximité de son côté avant et pourvue à proximité d'une seconde extrémité d'une poignée (28), le châssis de poignée (24) comprenant en outre une seconde partie (35) raccordée à la première partie (25) entre ses première et seconde extrémités (26, 28) et raccordée à la planche allongée (2) entre la première extrémité (26) de la première partie (25) et la au moins une roue arrière (13, 14), **caractérisé en ce que** les roues avant (8, 9) sont raccordées en rotation à un carter d'essieu avant commun (10), le carter d'essieu avant commun (10) étant situé en dessous de la planche allongée et étant pivotant autour d'un axe avant (11) raccordé à un côté avant de la planche allongée (2), dans lequel l'axe avant (11) forme un angle de plus d'un degré avec une droite virtuelle (12) s'étendant perpendiculairement au repose-pieds (4), tandis que le châssis de poignée (24) est situé au-dessus de la planche allongée et raccordé à la planche allongée (2) à proximité de son côté avant, dans lequel en utilisation, lorsque la personne debout sur le repose-pieds (4) force le châssis de poignée (24) dans une direction transversale perpendiculaire à un axe longitudinal de la planche allongée (2), la planche allongée (2) s'inclinera et le carter d'essieu avant commun (10) pivotera, dans lequel le châssis de poignée (24) est pliable d'une position droite à une position pliée et vice versa, dans lequel la première partie est raccordée en pivotement par la première extrémité (26) à la planche allongée (2) à proximité de son côté avant tandis que la seconde partie (35) est au moins raccordée en pivotement à la première partie (25) ou à la planche allongée (2).

2. Dispositif de transport (1) selon la revendication 1, **caractérisé en ce que** la seconde partie (35) est raccordée en pivotement à la première partie (25) et raccordée de façon détachable à la planche allongée (2) ou vice versa.

3. Dispositif de transport (1) selon la revendication 1, **caractérisé en ce que** la seconde partie (35) comprend au moins deux portions reliées en pivotement, une première portion étant raccordée en pivotement à la première partie (25) et une seconde portion étant raccordée en pivotement à la planche allongée (2).

4. Dispositif de transport (1) selon l'une des revendications précédentes, **caractérisé en ce que** le dispositif de transport (1) comprend au moins deux roues arrière (13, 14) raccordées en pivotement à un carter d'essieu arrière commun (15), le carter d'essieu arrière commun (15) étant pivotant autour d'un axe arrière (16) raccordé à un côté arrière de la planche allongée (2), dans lequel l'axe arrière (16) forme un angle de plus d'un degré avec la droite virtuelle (17) s'étendant perpendiculairement au repose-pieds (4).

5. Dispositif de transport (1) selon la revendication 4, **caractérisé en ce que** l'axe avant (11) et l'axe arrière (16) forment des angles de plus d'un degré dans des directions opposées par rapport à la droite virtuelle (12, 17) s'étendant perpendiculairement au repose-pieds (4).

6. Dispositif de transport (1) selon la revendication 4 ou 5, **caractérisé en ce que** la distance entre les deux roues avant (8, 9) est environ la même que la distance entre les deux roues arrière (13, 14).

7. Dispositif de transport (1) selon l'une des revendications précédentes, **caractérisé en ce que** la planche allongée (2) comprend une partie avant (3) pourvue d'au moins deux roues avant (8, 9), une partie centrale (4) et une partie arrière (5) pourvue de la au moins une roue arrière (13, 14), dans lequel la partie centrale (4) est abaissée par rapport à la partie avant (3) et à la partie arrière (5).

8. Dispositif de transport (1) selon l'une des revendications précédentes, **caractérisé en ce que** la planche allongée (2) est pourvue d'un mécanisme de frein (18) permettant de freiner la au moins une roue arrière (13, 14).

9. Dispositif de transport (1) selon l'une des revendications précédentes, **caractérisé en ce que** le dispositif de transport (1) comprend un moteur électrique permettant d'entraîner au moins l'une des roues avant (8, 9) et/ou la au moins une roue arrière (13, 4).

10. Dispositif de transport (1) selon l'une des revendications précédentes, **caractérisé en ce que** l'assise (30) est une assise flexible réalisée en tissu.

11. Dispositif de transport (1) selon l'une des revendications précédentes, **caractérisé en ce que** la planche allongée (2) est un ensemble réalisé en une seule unité.
